# EUROPÄISCHE PATENTSCHRIFT

(11) **EP 4 174 141 B1**
(45) Veröffentlichungstag und Bekanntmachung des Hinweises auf die Patenterteilung: **02.12.2026**
(21) Anmeldenummer: 21204723.7
(22) Anmeldetag: 26.10.2021
(51) Int. Cl.: C09D 11/037, C09D 11/04, C09D 11/107, B41M 1/10, C09B 67/22

(54) **INTENSIVE HOMOGENE UNIFLÄCHEN**
INTENSIVE HOMOGENEOUS UNISURFACES
SURFACES UNIFORMES INTENSIVEMENT HOMOGÈNES

(43) Veröffentlichungstag der Anmeldung: 03.05.2023
(73) Patentinhaber: SURTECO GmbH, 86647 Buttenwiesen (DE)
(72) Erfinder: BRAUN, Lydia, 86676 Ehekirchen (DE); SCHMORANZER, Andreas, 72589 Westerheim (DE)
(74) Vertreter: Cohausz & Florack

(56) Entgegenhaltungen:
- EP-A1- 0 651 029
- EP-A1- 3 770 221
- EP-A2- 1 178 090
- EP-A2- 1 217 044
- WO-A1-2015/068290
- GB-A- 2 254 856
- US-A- 4 565 576
- US-A- 5 100 934

## Beschreibung

Die vorliegende Erfindung betrifft eine Druckfarbe sowie deren Verwendung für den Tiefdruck von Dekorpapieren, ein Verfahren zur Herstellung eines einfarbigen Dekorpapiers unter Verwendung der Druckfarbe, ein einfarbig bedrucktes Dekorpapier, umfassend die Druckfarbe, sowie die Verwendung des einfarbig bedruckten Dekorpapiers zur Herstellung von Möbeln und Fußböden.

Dekorpapiere werden, insbesondere in der Möbelindustrie und im Innenausbau, zur Oberflächenbeschichtung von Holzwerkstoffen eingesetzt. Unter Dekorpapieren versteht man mit Kunstharz imprägnierte oder mit Kunstharz imprägnierte und oberflächenbehandelte, bedruckte oder unbedruckte Papiere.

Um eine dekorative Oberfläche auf dem Dekorpapier zu erzeugen, werden Dekorpapiere üblicherweise mit dem Rotationstiefdruckverfahren bedruckt und anschließend mit einem Kunstharz imprägniert. Beim Rotationstiefdruckverfahren wird das Druckbild durch mehrere Gravurwalzen auf das Papier übertragen. Die Übertragung der einzelnen Druckpunkte auf die Papieroberfläche muss dabei möglichst vollständig erfolgen, um ein qualitativ hochwertiges Druckergebnis zu erzielen.

Neben filigranen Dekoren, wie Holzmaserungen und Natursteinimitationen, sind in den letzten Jahren auch vermehrt intensive vollflächig einfarbige Dekore, sogenannte Uniflächen, bei denen die gesamte Möbel- oder Bodenfläche in einer einheitlichen Farbe eingefärbt ist, bei der Möbelherstellung und im Innenausbau gefragt. Solche intensiven einfarbigen Dekore wurden im Stand der Technik üblicherweise durch Einfärben des Dekorpapiers in der Masse bei der Papierherstellung oder einfarbiges Bedrucken gewährleistet. Das Einfärben des Dekorpapiers in der Masse bei der Papierherstellung hat den Nachteil, dass die Farbgebung des Papiers nicht mehr oder nur innerhalb bestimmter Grenzen geändert werden kann, so dass eine flexible Farbgebung nach Kundenwunsch für kleinere Losgrößen nicht oder nur eingeschränkt möglich ist.

Alternativ zum Einfärben des Dekorpapiers in der Masse, ist die Erzeugung von vollflächig einfarbig bedrucktem Dekorpapier (Uniflächen) durch den einfarbigen Druck von Tiefdruckfarben unter Verwendung eines vollflächig gravierten Tiefdruckzylinders auf einer Rotationstiefdruckmaschine möglich. Während dies zwar eine höhere Flexibilität in der Farbgebung auch für kleine Losgrößen ermöglicht, kommt es mit den derzeitigen Druckverfahren und unter Verwendung der bekannten Druckfarben jedoch zu einem nicht zufriedenstellenden inhomogenen Druckbild. Es treten beispielsweise durch ungenügendes Entleeren der in den Näpfchen der Gravurwalze befindlichen Druckfarbe auf das Dekorpapier Fehlstellen im Druckbild auf, sogenannte Missing Dots. Ferner sind Krähenfüße zu beobachten, die durch Zusammenziehen der übertragenen Druckfarben über die zu druckenden Rasterpunkte hinaus entstehen und partiell zu einer erhöhten Druckfarbenkonzentration führen. Vorhandene Krähenfüße im einfarbig bedruckten Dekorpapier wirken störend auf den Eindruck der Homogenität. Eine Tiefdruckfarbe, welche einen Stand der Technik darstellt, ist zum Beispiel in der EP1178090 offenbart.

Vor dem Hintergrund des Standes der Technik liegt der Erfindung die Aufgabe zugrunde ein verbessertes einfarbig bedrucktes Dekorpapier bereitzustellen, welches die genannten Nachteile des Standes der Technik nicht oder in deutlich geringerem Maße aufweist.

Gelöst wurde diese Aufgabe durch eine Druckfarbe insbesondere für den Tiefdruck von Dekorpapier nach Anspruch 1.

Es wurde überraschend gefunden, dass die Verwendung einer solchen Druckfarbe bei der Herstellung eines vollflächig bedruckten einfarbigen Dekorpapiers zu einer Verhinderung oder zumindest deutlichen Verringerung der Ausbildung von Krähenfüßen im Vergleich zur Verwendung von Druckfarben des Standes der Technik kommt. Hierdurch ist das einfarbige Druckbild insgesamt homogener und ruhiger und die Druckqualität damit signifikant verbessert.

Wenn vorliegend von Tiefdruck die Rede ist, so ist damit Rotationstiefdruck gemeint. Die erfindungsgemäße Druckfarbe kann allerdings auch für andere analoge Druckverfahren, beispielsweise Flexo-Druckverfahren verwendet werden.

Die erfindungsgemäße Druckfarbe enthält mindestens ein buntes Farbpigment. Ein buntes Farbpigment im Sinne der Erfindung ist in Abgrenzung zum Weißpigment ein buntes anorganisches oder organisches Pigment sowie deren Mischungen. Ein buntes Farbpigment ist damit kein Weißpigment im Sinne der Erfindung.

Beispiele für bunte anorganische Farbpigmente die erfindungsgemäß eingesetzt werden können sind Eisenoxidgelb (Ocker), Cadmiumgelb, Zinkchromatgelb, Cadmiumrot, Eisenoxidrot, Eisenoxidbraun, Chromoxidgrün, Cobaltblau, Ultramarin, Berliner Blau, Eisenoxidschwarz, Ruß.

Beispiele für bunte organische Farbpigmente die erfindungsgemäß eingesetzt werden können sind Azopigmente, Diazopigmente, Phthalocyaninpigmente, Chinacridonpigmente, Isoindolinonpigmente, Dioxazinpigmente, Perylenpigmente, Perinonpigmente, Thioindigopigmente, Anthrachinonpigmente und Chinophthalonpigmente.

Die erfindungsgemäße Druckfarbe enthält zwischen 0,5 und 15 Gew.-% mindestens eines bunten Farbpigments bezogen auf das Gesamtgewicht der Druckfarbe.

Die erfindungsgemäße Druckfarbe enthält zwischen 15 bis 25 Gew.-% eines Weißpigments, bezogen auf das Gesamtgewicht der Druckfarbe. Unter einem Weißpigment im Sinne der Erfindung wird ein unbuntes anorganisches Pigment verstanden. Für die erfindungsgemäße Druckfarbe sind die dem Fachmann bekannten Weißpigmente grundsätzlich geeignet. Bevorzugt ist das Weißpigment ausgewählt aus der Gruppe, bestehend aus Titandioxid, Lithopone, Bariumsulfat, Zinkoxid, Zinksulfid, Bleicarbonat, Calciumcarbonat und Ettringit sowie deren Mischungen.

Gemäß einer besonders bevorzugten Ausführungsform der Erfindung ist das Weißpigment ausgewählt aus der Gruppe, bestehend aus Titandioxid, Bariumsulfat und Calciumcarbonat sowie deren Mischungen. Der Einsatz von größeren Mengen Titandioxid als Weißpigment führt aufgrund dessen hoher Opazität/Weißgrad zu einer Verschiebung des Farbtons in den "Pastell-Bereich" und zu einem Verlust an Farbkraft. Es hat sich in diesem Zusammenhang in der Praxis als vorteilhaft erwiesen dem Verlust an Farbkraft sowie der Verschiebung des Farbtons in den "Pastell-Bereich" durch teilweise oder vollständige Substitution des Titandioxids durch Bariumsulfat und/oder Calciumcarbonat entgegenzuwirken, ohne dass hierdurch die vorteilhaften Eigenschaften der erfindungsgemäßen Druckfarbe beeinträchtigt werden. Gemäße einer bevorzugten Ausführungsform der Erfindung kann das Weißpigment beispielsweise zu mindestens 20%, vorzugsweise zu mindestens 30%, besonders bevorzugt zu mindestens 50%, ganz besonders bevorzugt zu mindestens 90%, bezogen auf die Gesamtmasse des Weißpigments, Bariumsulfat und/oder Calciumcarbonat enthalten, wobei der Rest Titandioxid ist.

Die erfindungsgemäße Druckfarbe kann ferner ein Bindemittel, vorzugsweise Acrylat-haltiges Bindemittel und/oder Casein, umfassen. Der Anteil des Bindemittels an der erfindungsgemäßen Druckfarbe kann zwischen 5 und 20 Gew.-% bezogen auf das Gesamtgewicht der Druckfarbe betragen.

Als weiteren Bestandteil umfasst die erfindungsgemäße Druckfarbe ein Lösungsmittel.

Das Lösungsmittel im der erfindungsgemässen Druckfarbe ist Wasser. Der Anteil des Lösungsmittels an der erfindungsgemäßen Druckfarbe beträgt zwischen 40 und 80 Gew.-% bezogen auf das Gesamtgewicht der Druckfarbe.

Die erfindungsgemäße Druckfarbe kann darüber hinaus für Druckfarben übliche und dem Fachmann bekannte Additive umfassen. Solche Additive sind beispielsweise Konservierungsmittel, Entschäumer, Benetzungsmittel, Neutralisationsmittel, Verdicker, Füllstoffe, insbesondere Zeolith, Kieselsäure oder Siliziumdioxid, Mattierungsmittel und Dispergiermittel. Der Anteil der Additive an der erfindungsgemäßen Druckfarbe kann zwischen 5 und 25% bezogen auf das Gesamtgewicht der Druckfarbe betragen. Ein Füllstoff im Sinne der Erfindung ist unbunt und nicht opak.

Das Einstellen eines bestimmten Farbtons der erfindungsgemäßen Druckfarbe erfolgt mit den dem Fachmann bekannten Mitteln. Insbesondere lässt sich durch den Anteil des Lösungsmittels, des Bindemittels und der Additive an der erfindungsgemäßen Druckfarbe der durch das bunte Farbpigment vorgegebene Farbton der erfindungsgemäßen Druckfarbe in seiner Helligkeit verändern. Dabei ist ein umso hellerer Farbton erzielbar, je höher der Anteil des Lösungsmittels, des Bindemittels und der Additive in der erfindungsgemäßen Druckfarbe ist. Ferner lässt sich der durch das bunte Farbpigment in der erfindungsgemäßen Druckfarbe vorgegebene Farbton durch Erhöhen des Anteils an Weißpigment in den Pastellbereich verschieben. Die jeweiligen Anteile an Bindemittel, Additiven, Lösungsmittel, Weiß- und Buntpigment in der erfindungsgemäßen Druckfarbe variieren daher innerhalb der angegebenen Grenzen von Farbton zu Farbton.

Ein weiterer Gegenstand der Erfindung ist ein Verfahren zur Herstellung eines einfarbigen Dekorpapiers, umfassend die Schritte:
a.) Bereitstellen eines Dekorpapiers,
b.) Vollflächiges Bedrucken des Dekorpapiers mit einer Druckfarbe,
wobei das Bedrucken in Schritt b.) mindestens zweifach mit derselben Druckfarbe nach Anspruch erfolgt.

Es wurde überraschend festgestellt, dass durch die Verwendung der erfindungsgemäßen Druckfarbe verbunden mit einem mindestens zweifachen Auftrag dieser Druckfarbe nicht nur das Auftreten von Krähenfüßen verhindert oder zumindest deutlich verringert werden kann, sondern zusätzlich eine Verringerung der Fehlstellen (Missing Dots) gewährleistet werden kann. Die Kombination der erfindungsgemäßen Druckfarbe mit einem mindestens zweifachen vollflächigen Bedrucken des Dekorpapiers führt daher im Ergebnis zu einem nochmals deutlich homogeneren einfarbigen Druckbild und einer weiter verbesserten Druckqualität des aufgebrachten vollflächig einfarbigen Dekors.

In Schritt a.) des erfindungsgemäßen Verfahrens wird ein Dekorpapier bereitgestellt. In dem erfindungsgemäßen Verfahren sind grundsätzlich die dem Fachmann bekannten Dekorpapiere einsetzbar. Diese können ungefärbt oder in der Masse gefärbt sein. Erfindungsgemäß ist ein Einfärben des Dekorpapiers in der Masse nicht notwendig um ein hochqualitatives homogenes vollflächig einfarbiges Dekorpapier zu erzeugen. Durch den Einsatz eines in der Masse gefärbten Dekorpapiers mit einem Grundfarbton, der einen möglichst geringen Kontrast zum gedruckten Farbton aufweist, lässt sich die Homogenität des einfarbig bedruckten Dekorpapiers, falls gewünscht, nochmals verbessern.

Das erfindungsgemäße Verfahren sieht in Schritt b.) das vollflächige Bedrucken des Dekorpapiers mit einer Druckfarbe vor, wobei das Bedrucken mindestens zweifach mit derselben Druckfarbe erfolgt, die mindestens ein buntes Farbpigment und zwischen 5 und 25 Gew.-% mindestens eines Weißpigments, bezogen auf das Gesamtgewicht der Druckfarbe, enthält.

Unter vollflächigem Bedrucken im Sinne der Erfindung wird ein Bedrucken verstanden, bei dem der Auftrag der Druckfarbe auf das Dekorpapier im Wesentlichen vollflächig erfolgt. Im Wesentlichen vollflächig bedeutet, dass der Farbauftrag auch nach zweimaligem Bedrucken unbeabsichtigt einen verschwindend geringen Anteil an Fehlstellen (Missing Dots) aufweisen kann, diese aber für den Betrachter im verpressten Endprodukt ohne Zuhilfenahme von Geräten zur optischen Vergrößerung nicht wahrnehmbar sind.

Bei der in Schritt b.) des erfindungsgemäßen Verfahrens eingesetzten Druckfarbe handelt es sich um die oben im Einzelnen beschriebene erfindungsgemäße Druckfarbe. Die im Zusammenhang mit der erfindungsgemäßen Druckfarbe oben beschriebenen Merkmale und Ausgestaltungen der erfindungsgemäßen Druckfarbe gelten daher für die Druckfarbe im erfindungsgemäßen Verfahren entsprechend. Wenn in diesem Zusammenhang vom mindestens zweifachen Bedrucken mit derselben Druckfarbe die Rede ist, so ist damit gemeint, dass die Zusammensetzung der beim ersten Bedrucken verwendeten erfindungsgemäßen Druckfarbe und der beim zweiten Bedrucken verwendeten erfindungsgemäßen Druckfarbe identisch ist. Insbesondere soll beim ersten und beim zweiten Bedrucken derselbe Farbton der erfindungsgemäßen Farbe vorliegen.

Das Bedrucken in Schritt b.) kann grundsätzlich mit den dem Fachmann bekannten Druckverfahren erfolgen. Gemäß einer bevorzugten Ausführungsform des erfindungsgemäßen Verfahrens erfolgt das Bedrucken in Schritt b.) mittels Tiefdruck. Gemäß einer weiteren bevorzugten Ausführungsform der Erfindung wird das Dekorpapier nach jedem Bedrucken in Schritt b.) getrocknet.

Vorrichtungen für den Tiefdruck sind dem Fachmann bekannt. Beispielsweise erfolgt das Bedrucken in Schritt b.) mittels Tiefdruck derart, dass zunächst in einem ersten Druckwerk der Tiefdruckvorrichtung die Rasternäpfchen eines vollflächig gravierten Rasterzylinders im Farbkasten durch eine Anspülwalze mit der erfindungsgemäßen Farbe befüllt werden und durch die Rotation des Zylinders mit Hilfe eines Rakelsystems abgerakelt werden. Die erfindungsgemäße Farbe befindet sich dann in den Rasternäpfchen des Rasterzylinders und nicht auf den Stegen des Rasterzylinders. Das Dekorpapier wird in einer Druckzone durch den Presseur an den eingefärbten Rasterzylinder angedrückt bzw. in Kontakt gebracht und die in den Rasternäpfchen vorhandene erfindungsgemäße Druckfarbe auf das Dekorpapier übertragen. Die Farbentleerung der Rasternäpfchen erfolgt dabei nicht vollständig, so dass ein geringer Anteil an erfindungsgemäßer Druckfarbe darin verbleibt. Der Grad der Entleerung der Rasternäpfchen ist unter anderem abhängig von der verwendeten Tiefdruckvorrichtung, der Beschaffenheit des Dekorpapiers sowie der Beschaffenheit der Druckfarbe. Nach der Druckzone löst sich der Kontakt des Rasterzylinders und des Dekorpapiers. Das einfach bedruckte Dekorpapier wird in einen Trockner geführt und unter Wärmezufuhr getrocknet. Das einfach vollflächig bedruckte Dekorpapier weist aufgrund der noch unzureichend homogen geschlossenen Farbschicht Fehlstellen (Missing Dots) auf. Der gesamte für das erste Druckwerk beschriebene Vorgang wird auf dem einfach vollflächig bedruckten Dekorpapier in einem zweiten Druckwerk der Tiefdruckmaschine mit einem gleichartigen vollflächig gravierten Tiefdruckzylinder und derselben Druckfarbe wiederholt, um ein zufriedenstellendes Druckergebnis hinsichtlich der Homogenität des Druckbildes, insbesondere durch Verringern der nach dem ersten Bedrucken vorhandenen Fehlstellen, zu erhalten.

An das mindestens zweifache Bedrucken mit derselben erfindungsgemäßen Druckfarbe in Schritt b.) kann sich optional ein Bedrucken mit einer von der erfindungsgemäßen Druckfarbe verschiedenen Druckfarbe anschließen. Diese nicht erfindungsgemäße Druckfarbe weist bevorzugt kein oder einen geringeren Anteil an Weißpigment auf. Der Auftrag einer nicht erfindungsgemäßen Druckfarbe nach dem mindestens zweifachen Auftrag derselben erfindungsgemäßen Druckfarbe in Schritt b.) des erfindungsgemäßen Verfahrens kann beispielsweise in einem dritten Druckwerk nach der oben für das erste Druckwerk beispielhaft beschriebenen Vorgehensweise erfolgen. Durch das Auftragen einer Druckfarbe, bevorzugt ohne oder mit geringerem Weißpigmentanteil, die von der erfindungsgemäßen Druckfarbe verschieden ist, lässt sich der Farbeindruck der einfarbigen bedruckten Fläche nochmals intensivieren.

Das erfindungsgemäße Verfahren kann in einem Schritt b.) nachgelagerten Schritt c.) das Imprägnieren des bedruckten Dekorpapiers umfassen. Unter Imprägnieren wird das vollständige Sättigen, insbesondere vollständige Füllen der Luftporen im Papier, des Dekorpapiers mit Kunstharz verstanden. Für das Imprägnieren kommen die dem Fachmann bekannten üblicherweise eingesetzten Kunstharze in Frage. Geeignete Kunstharze sind beispielsweise ausgewählt aus der Gruppe bestehend aus MelaminFormaldehyd-Harz, Harnstoff-Formaldehyd-Harz, Phenol-Formaldehyd-Harz, Polyacrylate, Acrylsäureester-Styrol-Copolymere sowie deren Mischungen. Gegenstand der Erfindung ist ferner ein einfarbig bedrucktes Dekorpapier, umfassend eine Sichtfläche und eine der Sichtfläche abgewandte Verbindungsfläche, wobei auf der Sichtfläche eine vollflächige einfarbige Schicht aus Druckfarbe angeordnet ist, dadurch gekennzeichnet, dass die Druckfarbe mindestens ein buntes Farbpigment in einer Menge von 0,5 und 15 Gew.-% und zwischen 5 und 25 Gew.-% mindestens eines Weißpigments, bezogen auf das Gesamtgewicht der Druckfarbe, enthält.

Unter der Sichtfläche des Dekorpapiers wird die Fläche des Dekorpapiers verstanden, die bedruckt wird und bei der späteren Verwendung des Dekorpapiers in einem dekorativen Schichtmaterial für den Möbelbau oder für Fußböden für den Betrachter sichtbar ist. Unter der Verbindungsfläche eines Dekorpapiers wird die Fläche verstanden, die der Sichtfläche abgewandt ist und sich bei der späteren Verwendung des Dekorpapiers in einem dekorativen Schichtmaterial in vollflächigem Kontakt mit dem Trägermaterial befindet. Als Trägermaterial gilt dabei das Material auf das das Dekorpapier mittels Temperatur und Druck auflaminiert wird. Die Verbindungsfläche des Dekorpapiers ist in der späteren Verwendung des Dekorpapiers in einem dekorativen Schichtmaterial für den Möbelbau oder für Fußböden für einen Betrachter nicht sichtbar.

Eine vollflächige einfarbige Schicht aus Druckfarbe im Sinne der Erfindung ist eine im Wesentlichen vollflächige einfarbige Schicht, die aus der erfindungsgemäßen Druckfarbe besteht. Die im Zusammenhang mit der erfindungsgemäßen Druckfarbe oben beschriebenen Merkmale und Ausgestaltungen der erfindungsgemäßen Druckfarbe gelten daher für die Druckfarbe in der Schicht des erfindungsgemäßen Dekorpapiers entsprechend. Im Wesentlichen vollflächig bedeutet, dass es in der Schicht einen verschwindend geringen Anteil an Fehlstellen (Missing Dots) geben kann, diese aber für den Betrachter ohne Zuhilfenahme von Geräten zur optischen Vergrößerung nicht wahrnehmbar sind.

Das einfarbig bedruckte Dekorpapier kann durch das erfindungsgemäße Verfahren erhalten werden, es kann aber auch mit einem anderen Verfahren, beispielsweise Flexo-Druck, unter Verwendung der erfindungsgemäßen Druckfarbe erhalten werden.

Ein weiterer Gegenstand der Erfindung ist die Verwendung der erfindungsgemäßen Druckfarbe für den Tiefdruck von Dekorpapieren.

Die im Zusammenhang mit der erfindungsgemäßen Druckfarbe oben beschriebenen Merkmale und Ausgestaltungen der erfindungsgemäßen Druckfarbe gelten daher für die Verwendung der Druckfarbe für den Tiefdruck entsprechend.

Schließlich ist auch die Verwendung des einfarbig bedruckten Dekorpapiers zur Herstellung von Möbeln und Fußböden Gegenstand der Erfindung.

Dekorpapiere werden üblicherweise zu dekorativen Schichtmaterialien weiterverarbeitet, die als Baustoffe bei der Möbelherstellung und im Innenausbau, insbesondere für Fußböden, Anwendung finden. Bei den dekorativen Schichtmaterialien handelt es sich hauptsächlich um sogenannte Hochdruck-Laminate (HPL) und Niederdruck-Laminate (LPL). Zur Herstellung eines Hochdruck-Laminats wird das Dekorpapier im unbedruckten oder bedruckten Zustand mit einem Kunstharz imprägniert und mit einer oder mehreren Lagen Phenolharz-getränktem Kraftpapier, sogenanntes Kernpapier, in einer Laminierpresse bei hoher Temperatur und unter Druck verpresst. Anschließend wird das so entstandene dekorative Schichtmaterial mit einem Trägermaterial, wie einem Holzwerkstoff, insbesondere einer HDF-Platte, MDF-Platte oder einer Spanplatte, verleimt oder verklebt. Ein Niederdruck-Laminat wird hergestellt, indem das unbedruckte oder bedruckte und mit einem Harz imprägnierte Dekorpapier bei hoher Temperatur und unter Druck direkt mit dem genannten Trägermaterial verpresst wird.

Gemäß einer bevorzugten Ausführungsform der Erfindung umfasst die Verwendung des einfarbig bedruckten Dekorpapiers zur Herstellung von Möbeln und Fußböden die Herstellung eines dekorativen Schichtmaterials, wie zuvor beschrieben.

Die folgenden Figuren und Beispiele dienen der weiteren Erläuterung der Erfindung.
- Fig. 1: Vergleich der mikroskopischen Aufnahme des Druckbilds nach dem einfachen Druck mit einer Druckfarbe des Standes der Technik (links) und mit einer erfindungsgemäßen Druckfarbe (rechts) auf einem weißen Papier.
- Fig. 2: Vergleich der mikroskopischen Aufnahme des Druckbilds nach dem zweifachen Druck mit einer Druckfarbe des Standes der Technik (links) und mit einer erfindungsgemäßen Druckfarbe (rechts) auf einem weißen Papier.
- Fig. 3: Vergleich der mikroskopischen Aufnahme des Druckbilds nach dem zweifachen Druck mit einer Druckfarbe des Standes der Technik (links) und mit einer erfindungsgemäßen Druckfarbe (rechts) auf einem grauen Papier.

### Beispiele

### Herstellung einer erfindungsgemäßen und nicht erfindungsgemäßen Druckfarbe

Die erfindungsgemäße sowie die nicht erfindungsgemäße Druckfarbe werden durch Mischen der folgenden Bestandteile in den angegebenen Gewichtsanteilen (Gew.-%) bezogen auf das Gesamtgewicht der Druckfarbe hergestellt:

| **Bestandteile** | **Erfindungsgemäße Druckfarbe** | **Vergleichsdruckfarbe** |
|---|---|---|
| Wasser | 41,16 | 64,51 |
| Casein-Bindemittel | 14,82 | 11,74 |
| Acrylat-Bindemittel | 4,06 | 2,86 |
| Pigment P.Y. 150 | 1,17 | 1,17 |
| Pigment P.R. 176 | 3,10 | 3,10 |
| Titandioxid | 21,7 | --- |
| Konservierungsmittel | 0,44 | 0,42 |
| Entschäumer | 0,24 | 0,26 |
| Benetzungsmittel | 0,86 | 0,78 |
| Neutralisationsmittel | 0,19 | 0,37 |
| Verdicker | 8,99 | 11,52 |
| Füllstoff | 0,65 | 0,65 |
| Mattierungsmittel | 2,43 | 2,43 |
| Dispergiermittel | 0,19 | 0,19 |

### Einfaches Bedrucken eines weißen Dekorpapiers

Anschließend wurde ein weißes Dekorpapier (SD229, 72g/m²; Fa. Technocell) einfach mit einem 100%-Rasterton der erfindungsgemäßen Druckfarbe oder der Vergleichsdruckfarbe im 100er Raster Zylinder bei einer Geschwindigkeit von 60 m/min mittels Tiefdruckmaschine bedruckt.

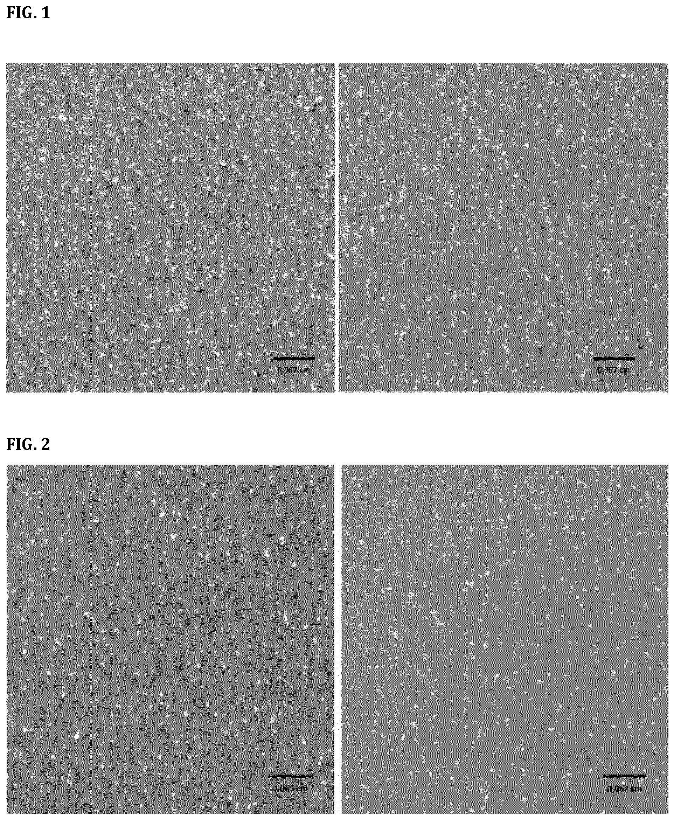

Figur 1 ist ein Vergleich der mikroskopischen Aufnahmen (Vergrößerung: X30,0) der dabei erzeugten Druckbilder zu entnehmen. Auf der linken Seite wird das Druckbild mit der Vergleichsdruckfarbe dargestellt und auf der rechten Seite das Druckbild mit der Druckfarbe des erfindungsgemäßen Beispiels. Nach einfachem Druck weist das Druckbild, welches mit der erfindungsgemäßen Druckfarbe erzeugt wurde, im Vergleich zu dem Druckbild, welches mit der Vergleichsdruckfarbe erzeugt wurde, eine deutlich geringere Ausprägung von Krähenfüßen auf. Das Druckbild mit der erfindungsgemäßen Druckfarbe wirkt insgesamt deutlich homogener.

### Zweifaches Bedrucken eines weißen Dekorpapiers

Als nächstes wurde ein weißes Dekorpapier (SD229, 72g/m²; Fa. Technocell) zweifach mit einem 100%-Rasterton der erfindungsgemäßen Druckfarbe oder der Druckfarbe des Vergleichsbeispiels im 100er Raster Zylinder bei einer Geschwindigkeit von 60 m/min mittels Tiefdruckmaschine bedruckt.

Figur 2 ist ein Vergleich der mikroskopischen Aufnahmen (Vergrößerung: X30,0) der dabei erzeugten Druckbilder zu entnehmen. Auf der linken Seite wird das Druckbild mit der Druckfarbe des Vergleichsbeispiels dargestellt und auf der rechten Seite das Druckbild mit der Druckfarbe des erfindungsgemäßen Beispiels. Nach zweifachem Druck weist das Druckbild, welches mit der erfindungsgemäßen Druckfarbe erzeugt wurde, sowohl eine deutlich geringere Ausprägung von Krähenfüßen auf als auch eine etwas geringere Ausprägung an Fehlstellen auf als das Druckbild das mit der Vergleichsdruckfarbe erzeugt wurde. Das Druckbild mit der erfindungsgemäßen Druckfarbe wirkt insgesamt deutlich homogener.

### Zweifaches Bedrucken eines grauen Dekorpapiers

Schließlich wurde ein graues Dekorpapier (SD0068, 70 g/m²; Fa. Technocell) zweifach mit einem 100%-Rasterton der erfindungsgemäßen Druckfarbe oder der Druckfarbe des Vergleichsbeispiels im 100er Raster Zylinder bei einer Geschwindigkeit von 60 m/min mittels Tiefdruckmaschine bedruckt.

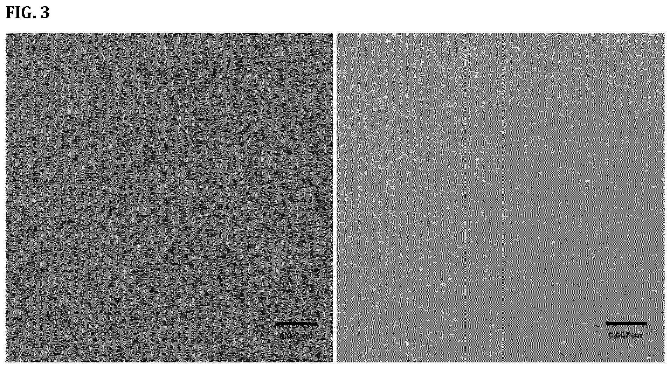

Figur 3 ist ein Vergleich der mikroskopischen Aufnahmen (Vergrößerung: X30,0) der dabei erzeugten Druckbilder zu entnehmen. Auf der linken Seite wird das Druckbild mit der Druckfarbe des Vergleichsbeispiels dargestellt und auf der rechten Seite das Druckbild mit der Druckfarbe des erfindungsgemäßen Beispiels. Nach zweifachem Druck weist das Druckbild, welches mit der erfindungsgemäßen Druckfarbe auf grauem Papier erzeugt wurde, sowohl eine deutlich geringere Ausprägung von Krähenfüßen auf als auch eine etwas geringere Ausprägung an Fehlstellen auf als das Druckbild das mit der Vergleichsdruckfarbe erzeugt wurde. Im Vergleich zu dem Druckbild der Fig. 2, welches auf weißem Papier erzeugt wurde, treten die dennoch vorhandenen Fehlstellen durch Verwendung des grauen Papiers aufgrund des geringeren Kontrastes noch stärker in den Hintergrund. Die Homogenität des Druckbildes mit der erfindungsgemäßen Druckfarbe wurde durch die Verwendung eines grauen Papiers folglich nochmals gesteigert.

## Patentansprüche

1. Druckfarbe, insbesondere für den Tiefdruck von Dekorpapier, umfassend mindestens ein buntes Farbpigment in einer Menge zwischen 0,5 und 15 Gew.-%, zwischen 15 und 25 Gew.-% mindestens eines Weißpigments bezogen auf das Gesamtgewicht der Druckfarbe, sowie ein Lösungsmittel in einer Menge von 40 bis 80 Gew.-%, jeweils bezogen auf das Gesamtgewicht der Druckfarbe, wobei das Lösungsmittel Wasser ist.

2. Druckfarbe gemäß Anspruch 1, **dadurch gekennzeichnet, dass** das Weißpigment ausgewählt ist aus der Gruppe, bestehend aus Titandioxid, Lithopone, Bariumsulfat, Zinkoxid, Zinksulfid, Bleicarbonat, Calciumcarbonat und Ettringit sowie deren Mischungen.

3. Druckfarbe nach einem der vorhergehenden Ansprüche, **dadurch gekennzeichnet, dass** das Weißpigment ausgewählt ist aus der Gruppe, bestehend aus Titandioxid, Bariumsulfat und Calciumcarbonat sowie deren Mischungen.

4. Druckfarbe nach einem der vorhergehenden Ansprüche, **dadurch gekennzeichnet, dass** die Druckfarbe ferner ein Bindemittel, vorzugsweise ein Acrylat-haltiges Bindemittel und/oder Casein, umfasst.

5. Druckfarbe nach einem der vorhergehenden Ansprüche, **dadurch gekennzeichnet, dass** die Druckfarbe ferner Additive, vorzugsweise in einer Menge von 5 bis 25 Gew.-%, bezogen auf das Gesamtgewicht der Druckfarbe, umfasst.

6. Verfahren zur Herstellung eines einfarbigen Dekorpapiers, umfassend die Schritte:
a.) Bereitstellen eines Dekorpapiers,
b.) Vollflächiges Bedrucken des Dekorpapiers mit einer Druckfarbe,
**dadurch gekennzeichnet, dass** das Bedrucken in Schritt b.) mindestens zweifach mit derselben Druckfarbe erfolgt, die mindestens ein buntes Farbpigment in einer Menge zwischen 0,5 und 15 Gew.-%, zwischen 15 und 25 Gew.-% mindestens eines Weißpigments sowie ein Lösungsmittel in einer Menge von 40 und 80 Gew.-%, jeweils bezogen auf das Gesamtgewicht der Druckfarbe, enthält, wobei das Lösungsmittel Wasser ist.

7. Verfahren nach Anspruch 6, **dadurch gekennzeichnet, dass** das Bedrucken in Schritt b.) mittels Tiefdruck erfolgt.

8. Verfahren nach Anspruch 6 oder 7, **dadurch gekennzeichnet, dass** nach jedem Bedrucken in Schritt b.) ein Trocknen des Dekorpapiers erfolgt.

9. Verfahren nach einem der Ansprüche 6 bis 8, **dadurch gekennzeichnet, dass** sich an das mindestens zweifache Bedrucken mit derselben Druckfarbe in Schritt b.) ein Bedrucken mit einer anderen Druckfarbe, insbesondere ohne Weißpigment, anschließt.

10. Verfahren nach einem der Ansprüche 6 bis 9, **dadurch gekennzeichnet, dass** dieses in einem Schritt b.) nachgelagerten Schritt c.) das Imprägnieren des bedruckten Dekorpapiers umfasst.

11. Einfarbig bedrucktes Dekorpapier, umfassend eine Sichtfläche und eine der Sichtfläche abgewandte Verbindungsfläche, wobei auf der Sichtfläche eine vollflächige einfarbige Schicht bestehend aus Druckfarbe angeordnet ist, **dadurch gekennzeichnet, dass** die Druckfarbe mindestens ein buntes Farbpigment in einer Menge zwischen 0,5 und 15 Gew.-% und zwischen 15 und 25 Gew.-% mindestens eines Weißpigments, jeweils bezogen auf das Gesamtgewicht der Druckfarbe, enthält.

12. Verwendung der Druckfarbe nach einem der Ansprüche 1 bis 5 für den Tiefdruck von Dekorpapieren.

13. Verwendung des einfarbig bedruckten Dekorpapiers nach Anspruch 11 oder des gemäß Anspruch 6 bis 10 hergestellten einfarbig bedruckten Dekorpapiers zur Herstellung von Möbeln und Fußböden.

## Claims

1. Printing ink, in particular for gravure printing of decor paper, comprising at least one colored color pigment in an amount between 0.5 and 15 wt.-%, between 15 and 25 wt.-% of at least one white pigment based on the total weight of the printing ink, and a solvent in an amount of 40 to 80 wt.-%, in each case based on the total weight of the printing ink, wherein the solvent is water.

2. Printing ink according to claim 1, **characterized in that** the white pigment is selected from the group consisting of titanium dioxide, lithopone, barium sulfate, zinc oxide, zinc sulfide, lead carbonate, calcium carbonate and ettringite, and mixtures thereof.

3. Printing ink according to any of the preceding claims, **characterized in that** the white pigment is selected from the group consisting of titanium dioxide, barium sulfate and calcium carbonate, and mixtures thereof.

4. Printing ink according to any of the preceding claims, **characterized in that** the printing ink further comprises a binder, preferably an acrylate-containing binder and/or casein.

5. Printing ink according to any of the preceding claims, **characterized in that** the printing ink further comprises additives, preferably in an amount of 5 to 25 wt.-%, based on the total weight of the printing ink.

6. Method for producing a unicolored decor paper, comprising the steps:
a.) providing a decor paper,
b.) full-surface printing of the decor paper with a printing ink,
**characterized in that** the printing in step b.) is carried out at least twice with the same printing ink which contains at least one colored color pigment in an amount between 0.5 and 15 wt.-%, between 15 and 25 wt.-% of at least one white pigment and a solvent in an amount of 40 to 80 wt.-%, in each case based on the total weight of the printing ink, wherein the solvent is water.

7. Method according to claim 6, **characterized in that** the printing in step b.) is carried out by means of gravure printing.

8. Method according to claim 6 or 7, **characterized in that** after each printing in step b.), the decor paper is dried.

9. Method according to any of claims 6 to 8, **characterized in that** the at least twofold printing with the same printing ink in step b.) is followed by printing with another printing ink, in particular without white pigment.

10. Method according to any of claims 6 to 9, **characterized in that**, in a step c.) downstream of step b.), it comprises impregnating the printed decor paper.

11. Unicolored printed decor paper comprising a visible surface and a bonding surface facing away from the visible surface, wherein a full-surface unicolored layer consisting of printing ink is arranged on the visible surface, **characterized in that** the printing ink contains at least one colored color pigment in an amount between 0.5 and 15 wt.-% and between 15 and 25 wt.-% of at least one white pigment, in each case based on the total weight of the printing ink.

12. Use of the printing ink according to any of claims 1 to 5 for gravure printing of decor papers.

13. Use of the unicolored printed decor paper according to claim 11 or of the unicolored printed decor paper produced according to claims 6 to 10 for producing furniture and floors.

## Revendications

1. Encre d'impression, en particulier pour l'impression en héliogravure de papier décor, comprenant au moins un pigment coloré chromatique en une quantité comprise entre 0,5 et 15 % en poids, entre 15 et 25 % en poids d'au moins un pigment blanc, rapporté au poids total de l'encre d'impression, ainsi qu'un solvant en une quantité de 40 à 80 % en poids, dans chaque cas rapporté au poids total de l'encre d'impression, le solvant étant de l'eau.

2. Encre d'impression selon la revendication 1, **caractérisée en ce que** le pigment blanc est choisi dans le groupe constitué par le dioxyde de titane, la lithopone, le sulfate de baryum, l'oxyde de zinc, le sulfure de zinc, le carbonate de plomb, le carbonate de calcium et l'ettringite, ainsi que leurs mélanges.

3. Encre d'impression selon l'une quelconque des revendications précédentes, **caractérisée en ce que** le pigment blanc est choisi dans le groupe constitué par le dioxyde de titane, le sulfate de baryum et le carbonate de calcium ainsi que leurs mélanges.

4. Encre d'impression selon l'une quelconque des revendications précédentes, **caractérisée en ce que** l'encre d'impression comprend en outre un liant, de préférence un liant contenant de l'acrylate et/ou de la caséine.

5. Encre d'impression selon l'une quelconque des revendications précédentes, **caractérisée en ce que** l'encre d'impression comprend en outre des additifs, de préférence en une quantité de 5 à 25 % en poids, rapportée au poids total de l'encre d'impression.

6. Procédé de fabrication d'un papier décor unicolore, comprenant les étapes:
a.) fournir un papier décor,
b.) imprimer sur toute la surface le papier décor avec une encre d'impression,
**caractérisé en ce que** l'impression à l'étape b.) est effectuée au moins deux fois avec la même encre d'impression qui contient au moins un pigment coloré chromatique en une quantité comprise entre 0,5 et 15 % en poids, entre 15 et 25 % en poids d'au moins un pigment blanc ainsi qu'un solvant en une quantité de 40 à 80 % en poids, dans chaque cas rapporté au poids total de l'encre d'impression, le solvant étant de l'eau.

7. Procédé selon la revendication 6, **caractérisé en ce que** l'impression à l'étape b.) est effectuée par héliogravure.

8. Procédé selon la revendication 6 ou 7, **caractérisé en ce qu'**un séchage du papier décor est effectué après chaque impression à l'étape b.).

9. Procédé selon l'une quelconque des revendications 6 à 8, **caractérisé en ce que** l'impression au moins deux fois avec la même encre d'impression à l'étape b.) est suivie d'une impression avec une autre encre d'impression, en particulier sans pigment blanc.

10. Procédé selon l'une quelconque des revendications 6 à 9, **caractérisé en ce que** celui-ci comprend, dans une étape c.) située en aval de l'étape b.), l'imprégnation du papier décor imprimé.

11. Papier décor imprimé unicolore, comprenant une surface visible et une surface de liaison tournée à l'opposé de la surface visible, une couche unicolore sur toute la surface, constituée d'encre d'impression, étant disposée sur la surface visible, **caractérisé en ce que** l'encre d'impression contient au moins un pigment coloré chromatique en une quantité comprise entre 0,5 et 15 % en poids et entre 15 et 25 % en poids d'au moins un pigment blanc, dans chaque cas rapporté au poids total de l'encre d'impression.

12. Utilisation de l'encre d'impression selon l'une quelconque des revendications 1 à 5 pour l'impression en héliogravure de papiers décors.

13. Utilisation du papier décor imprimé unicolore selon la revendication 11 ou du papier décor imprimé unicolore fabriqué selon les revendications 6 à 10 pour la fabrication de meubles et de sols.
